# EUROPEAN PATENT APPLICATION

(11) **EP 1 804 442 A1**
(43) Date of publication of application: **04.07.2007**
(21) Application number: 07000073.2
(22) Date of filing: 03.01.2007
(51) Int. Cl.: H04L 12/56

(54) **Apparatus and method for transparent relaying in a multi-hop relay cellular network**

(30) Priority: 03.01.2006 KR 20060000423; 30.06.2006 KR 20060060776
(71) Applicant: Samsung Electronics Co., Ltd., Suwon-si, Gyeonggi-Do (KR)
(72) Inventor: Lee, Mi-Hyun, Gwanak-gu Seoul (KR); Cho, Jae-Weon, Yeongtong-gu Suwon-si Gyeonggi-do (KR); Park, Jeong-Ho, Seocho-gu Seoul (KR); Hong, Song-Nam, Gangdong-gu Seoul (KR); Joo, Pan-Yuh, Seocho-gu Seoul (KR); Jung, Jun-Young, Giheung-gu Yongin-si Gyeonggi-do (KR); Lee, Sung-Jin, Songpa-gu Seoul (KR); Kang, Hyun-Jeong, Gangnam-gu Seoul (KR)
(74) Representative: Grünecker, Kinkeldey, Stockmair & Schwanhäusser Anwaltssozietät

(57) **Abstract**

An apparatus and method for transparently relaying a signal using a plurality of frequency bands in a multi-hop relay cellular network are provided, in which a Relay Station (RS) communicates with a Base Station (BS) via a relay link in a first frequency band and communicates with a Mobile Station (MS) within the sub-cell of the RS via a sub-cell link in a second frequency band different from the first frequency band.

## Description

### PRIORITY

This application claims priority under 35 U.S.C. § 119 to an application filed in the Korean Intellectual Property Office on January 3, 2006 and assigned Serial No. 2006-423 and an application filed in the Korean Intellectual Property Office on June 30, 2006 and assigned Serial No. 2006-60776, the contents of each of which are incorporated herein by reference.

### BACKGROUND OF THE INVENTION

### 1. Field of the Invention

The present invention relates generally to a multi-hop relay cellular network, and in particular, to an apparatus and method for providing a transparent relay service in a plurality of frequency bands in a multi-hop relay cellular network.

### 2. Description of the Related Art

In Fourth-Generation (4G) mobile communication systems, radiuses of cells are reduced to achieve higher transmission rate and accommodate a larger number of calls. Centralized network design with conventional wireless network configuration technology is not viable for a 4G mobile communication system. Rather, a wireless network should allow for distributed control and implementation, and cope actively with an environment change, such as addition of a new Base Station (BS). That's why a 4G mobile communication system should use a self-configurable wireless network.

For real deployment of a self-configurable network, technologies used for an Ad Hoc network are introduced to a mobile communication system. A major example is a multi-hop relay network configured by introducing a multi-hop relay scheme used for the Ad Hoc network to a cellular network. Since communications are conducted between a BS and a Mobile Station (MS) via a direct link, a highly reliable radio communication link can be easily established between them in the cellular network.

However, the fixedness of BSs impedes flexible wireless network configuration, which makes it difficult to provide efficient services in a radio environment experiencing a fluctuating traffic distribution and a great change in the number of calls. To avert this problem, a relay scheme is adopted in which data is conveyed through multiple hops via neighbor MSs or neighbor Relay Stations (RSs). A multi-hop relay scheme facilitates fast network reconfiguration adaptive to an environmental change and renders an overall wireless network operation efficient. Also, a radio channel with better quality can be provided to an MS by installing an RS between the BS and the MS, and thus establishing a multi-hop relay path via the RS. What is better, since high-speed data channels can be provided to MSs in a shadowing area or an area where communications with the BS are unavailable, cell coverage is expanded.

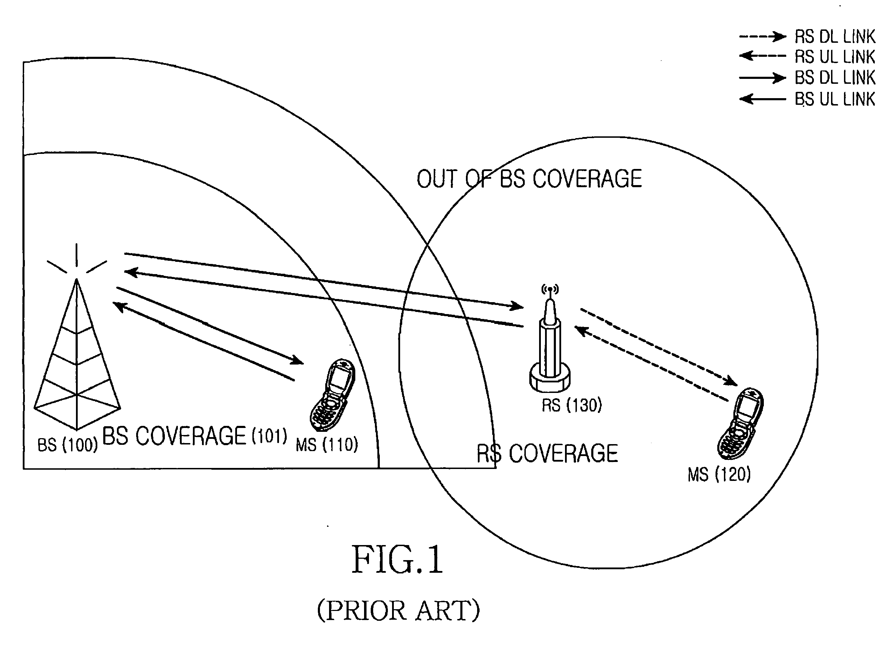

FIG 1 shows a typical multi-hop relay cellular network. An MS 110 within a service area 101 of a BS 100 is connected to the BS 100 via a direct link. On the other hand, an MS 120, which is located outside the service area 101 of the BS 100 and thus placed in a poor channel state, communicates with the BS 100 via a relay link of an RS 130.

The RS 130 may provide a better-quality radio channel to the MS 120 when it is located outside the service area 101 of the BS 100 or in a shadowing area experiencing severe shielding effects of buildings. Thus, the BS 100 can provide a high-speed data channel to the cell boundary area in a poor channel state using the multi-hop relay scheme and thus expand its cell coverage.

The RS 130 relays a downlink signal received from the BS 100 to the MS 120 and an uplink signal received from the MS 120 to the BS 100. Therefore, there exists a BS-RS link between the BS 100 and the RS 130, an RS-MS link between the RS 130 and the MS 120, and a BS-MS link between the BS 100 and the MS 110. Each of the links is divided into a downlink and an uplink according to ends of the data transmission path.

The RS 130 should relay control information as control information associated with initial access as well as traffic in order to enable communications between the BS 100 and the MS 120. Hence, the RS 130 should provide a relay service so the MS 120 can communicate without a need for procuring any other additional function.

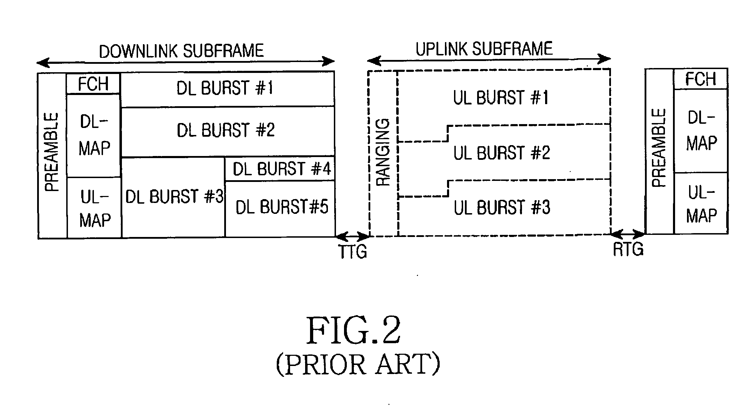

If the BS 100 communicates with the MS 110 using a frame structure shown in FIG 2, the RS 130 also should relay a signal in the same frame structure to the MS 120.

FIG 2 shows a frame structure for a typical Broadband Wireless Access (BWA) communication system. The frame structure is for a Time Division Duplex (TDD) frame complying with Institute of Electrical and Electronics Engineers (IEEE) 802.16. The TDD frame is divided into a downlink sub-frame and an uplink sub-frame in time. The downlink sub-frame starts with a synchronization channel followed by a control channel and downlink bursts. The uplink sub-frame includes a control channel and uplink bursts.

As described above, from the perspective of an MS that receives a relay service, the MS needs to communicate via an RS without any additional function. Thus, there exists a need for relaying signals transparently from the RS.

### SUMMARY OF THE INVENTION

An aspect of the present invention is to address at least the problems and/or disadvantages and to provide at least the advantages described below. Accordingly, an aspect of the present invention is to provide an apparatus and method for transparently relaying a signal in a multi-hop relay cellular network.

Another aspect of the present invention is to provide an apparatus and method for transparently relaying a signal in a plurality of frequency bands from an RS in a multi-hop relay cellular network.

According to an aspect of the present invention, there is provided a method of supporting a relay service in an RS in a multi-hop relay cellular network, in which the RS communicates with a higher-layer node in a first frequency band, and communicates with a lower-layer node in a second frequency band.

According to another aspect of the present invention, there is provided an apparatus for supporting a relay service in an RS in a multi-hop relay cellular network, in which a timing controller provides a timing signal for transmitting and receiving signals in use frequency bands of predetermined links, a first transceiver communicates with a higher-layer node in a first frequency band according to the timing signal, and a second transceiver communicates with a lower-layer node in a second frequency band according to the timing signal.
According to a further aspect of the present invention, there is provided a subframe configuration method for supporting a relay service using at least two frequency bands in a multi-hop relay BWA communication system, in which a first frequency band-subframe and a second frequency band-subframe are configured in a first zone of a subframe, the first frequency band-subframe being used for communicating between a BS and at least one of an MS and a first RS that does not provide a synchronization channel and the second frequency band-subframe being used for communicating between a second RS that provides a synchronization channel and an MS, and a first frequency band-subframe for communicating between the BS and the second RS is configured in a second zone of the subframe.

According to still another aspect of the present invention, there is provided a subframe configuration method for supporting a relay service using at least two frequency bands in a multi-hop relay BWA communication system, in which a subframe for communicating between a BS and at least one of an MS and an RS is configured in a first zone of a subframe, and a first frequency band-subframe for communicating between the BS and an MS and a second frequency band-frame for communicating between the RS and an MS are configured in a second zone of the subframe.

### BRIEF DESCRIPTION OF THE DRAWINGS

The above and other objects, features and advantages of the present invention will become more apparent from the following detailed description when taken in conjunction with the accompanying drawings in which:
FIG 1 illustrates the configuration of a typical multi-hop relay cellular network;
FIG 2 illustrates a frame structure for a typical BWA communication system;
FIG 3 illustrates the configuration of a multi-hop relay cellular network for transparent relaying according to the present invention;
Figs. 4A and 4B illustrate a frame structure for transparent relaying according to a first embodiment of the present invention;
Figs. 5A and 5B illustrate a frame structure for transparent relaying according to a second embodiment of the present invention;
Figs. 6A and 6B illustrate a frame structure for transparent relaying according to a third embodiment of the present invention;
Figs. 7A and 7B illustrate a frame structure for transparent relaying according to a fourth embodiment of the present invention;
FIG 8 illustrates the configuration of a multi-hop relay cellular network suffering interference according to the present invention;
Figs. 9A to 9D illustrate transmission timings for canceling interference in the multi-hop relay network according to the present invention;
FIG 10 illustrates the configuration of an extended multi-hop relay network for transparent relaying according to the present invention;
FIG 11 is a flowchart illustrating an operation for transparent relaying in an RS according to the present invention;
FIG 12 is a diagram illustrating a signal flow for transparent relaying in the multi-hop relay cellular network according to the present invention;
FIG 13 illustrates a transmission operation in an RS according to the present invention;
FIG 14 is a block diagram of a BS for transparent relaying according to the present invention; and
FIG 15 is a block diagram of the RS for transparent relaying according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a transparent relay service in a plurality of frequency bands in a multi-hop relay cellular network. That is, the cellular network uses a plurality of frequency bands to provide a transparent relay service and communications are conducted via a BS-RS link and an RS-MS link using different frequency bands. The transparent relay service is defined as a service that allows a relay service via an RS to appear a direct service from a BS from the perspective of an MS that receives the relay service.

The following description is made in the context of a Time Division Duplex-Orthogonal Frequency Division Multiplexing Access (TDD-OFDMA) wireless communication system, to which the present invention is not limited. Thus, it is to be clearly understood that the present invention is applicable to any other multiple access scheme. The BS-MS link is called a direct link, the BS-RS link is called a relay link, and the RS-MS link is called a sub-cell link.

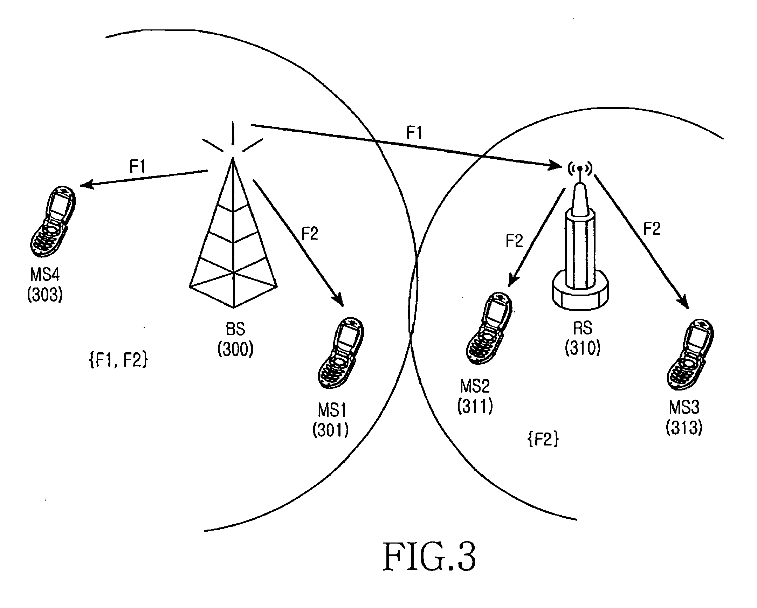

FIG 3 shows a multi-hop relay cellular network for transparent relaying according to the present invention. It is assumed that signals are transparently relayed in two different frequency bands by a two-hop relay scheme. MSs 301 and 303 (MS1 and MS4) within the service area of a BS 300 are connected to the BS via direct links. Yet, MSs 311 and 313 (MS2 and MS3) outside the service area of the BS 300 are connected to the BS 300 via a relay link provided by an RS 310.

The BS 300 communicates with MS1 and MS4 in two frequency bands F1 and F2 and with the RS 310 in F1. The BS 300 controls the operation of the RS 310 through a BS-RS link control channel.

The RS 310 selects signals to be relayed from among signals received in F1 from the BS 300 and then relays the selected signals in F2 to MS2 and MS3. The signal selection is performed under the control of the BS 300.

That is, the RS 310 communicates with the BS 300 in F1 and with MS2 and MS3 in F2. The BS 300 communicates with the RS 310 in F1 and with MS1 and MS4 having the direct links in F1 and F2.

As described above, the BS may communicate with a plurality of RSs in the same or different frequency bands by a multiple access scheme. Also, the same or different frequencies may be allocated to the relay links of the RSs according to a frequency reuse factor.

To facilitate handoff between an area serviced via the relay link and an area serviced via the direct link, the cellular network may allocate F2 to MSs adjacent to the RS 310. For example, the cellular network can allocate the same frequency band F2 as used for the relay link between the RS 310 and MS2 to the direct link between the BS 300 and MS1.

The RS 310 should support a network entry procedure in F2 to enable MS2 and MS3 to perform initial access to the BS 300, i.e. network entry. Specifically, the RS 310 relays a control channel signal and a traffic signal in F2 to MS2 and MS3, and relays a random access channel signal sent for the initial access in F2 by MS2 and MS3 to the BS 300.

In this way, the RS 310 communicates via two links, that is, the BS-RS link and the RS-MS link using the two different frequency bands F1 and F2.

F1 and F2 may be adjacent to each other. The RS should distinguish a transmission signal from a reception signal in the successive frequency bands. Since a relay link subframe and a sub-cell link subframe delivered in different frequency bands may differ in operation mode, different frame structures may be designed depending on whether transmission is to be distinguished from reception in the successive frequency bands and hardware complexity.

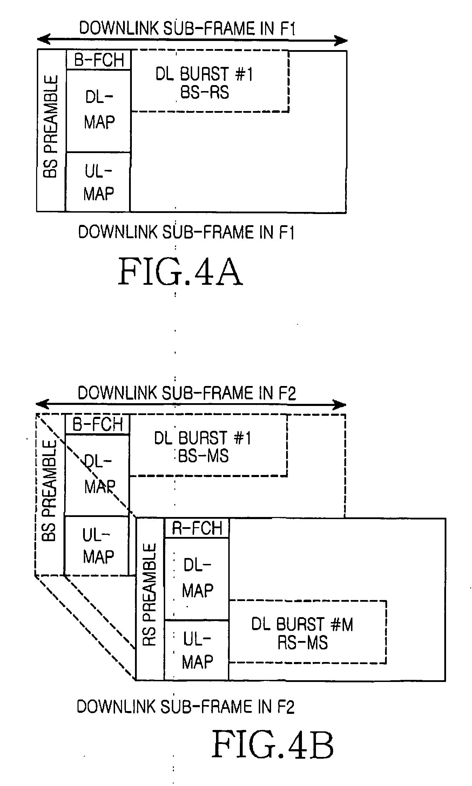

Figs. 4A and 4B show downlink sub-frame structures for transparent relaying according to an embodiment of the present invention. The downlink sub-frames structures are for downlink sub-frames of the frequency bands F1 and F2 at view of RS1 shown in FIG 3, for example. While the downlink subframes are described herein, the uplink sub-frames also take the same format.

FIG 4A shows a downlink sub-frame in F1 and FIG 4B shows downlink sub-frames in F2. The downlink sub-frame in F1 carries a signal directed from the BS 300 to MS4 and the RS 310. There are two downlink sub-frames in F2. A first downlink sub-frame in F2 carries a signal from the BS 300 to MS1 and a second downlink sub-frame in F2 carries a signal from the RS 310 to MS2 and MS3. The first and second downlink sub-frames in F2 are spatially multiplexed.

The BS 300 communicates with the MS1 and MS4 in F2 and the RS 310 communicates with MS2 and MS3 via the sub-cell link.

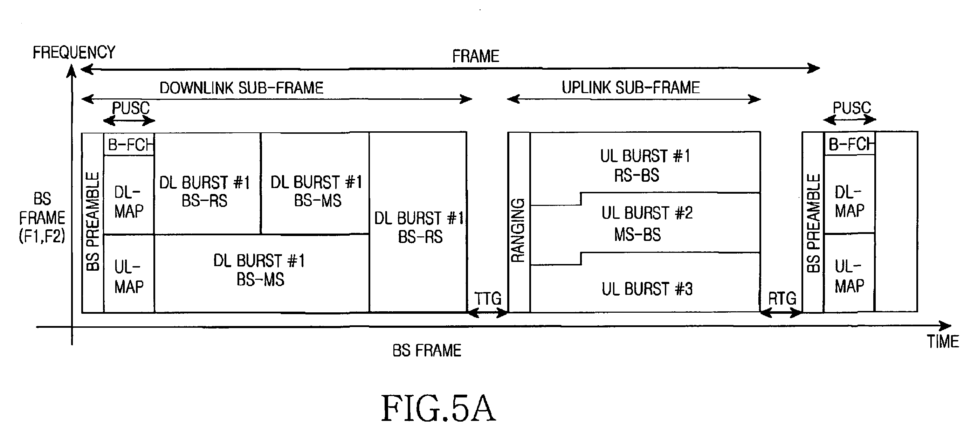

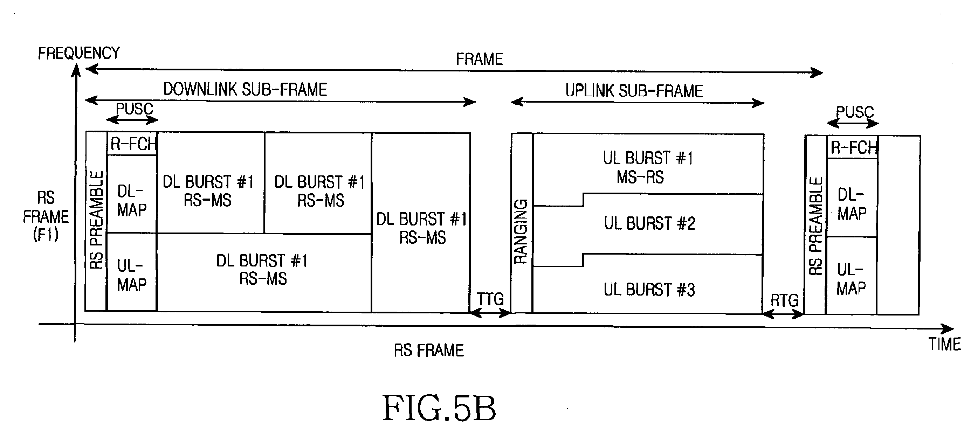

Figs. 5A and 5B show another example of a frame structure for transparent relaying according to the present invention. This frame structure is characterized in that a BS frame is synchronized to an RS frame on the assumption that the RS distinguishes a transmission signal from a reception signal by frequency.

Referring to Figs. 5A and 5B, the BS configures a BS frame for F1 to communicate with the RS and an MS having a direct link with the BS in F1, and a BS frame for F2 to communicate with another MS having a direct link with the BS in F2. The BS may allocate the same or different frequency bands to RSs. As with Frequency Division Duplex (FDD), the RS communicates with the BS and MSs in different frequency bands. In the BS frame, the RS communicates with the BS in the same manner as the MS communicating with the BS via the direct link. If a frequency band is independently allocated to the RS link, a new communication scheme may be used.

The RS configures an RS frame to communicate with the MSs within the sub-cell area or multi-hop RSs in F2. That is, the RS configures an RS frame for F2 different from the frequency band F1 in which the RS communicates with the BS. Given two or more frequency bands, the RS may provide a frame for the RS link using one or more frequency bands for the multi-hop RSs or the MSs. The RS frame may be configured in a conventional frame structure and the details of the RS frame structure may vary depending on system configuration.

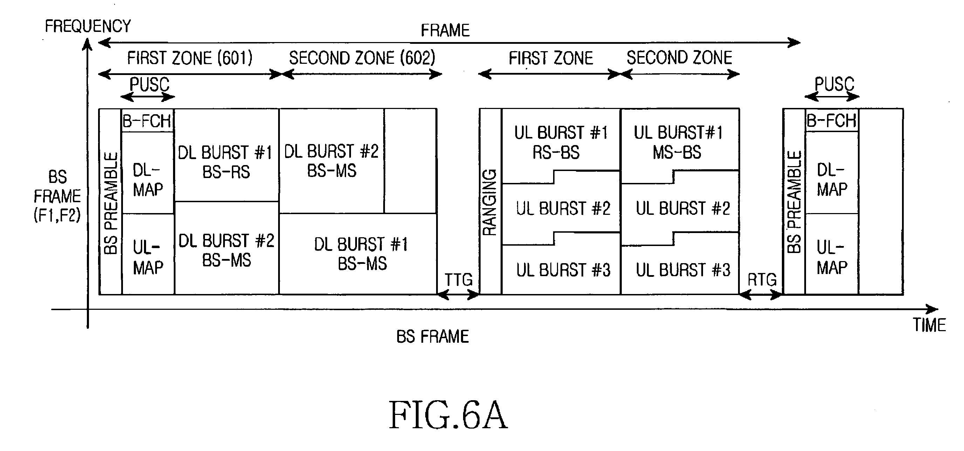

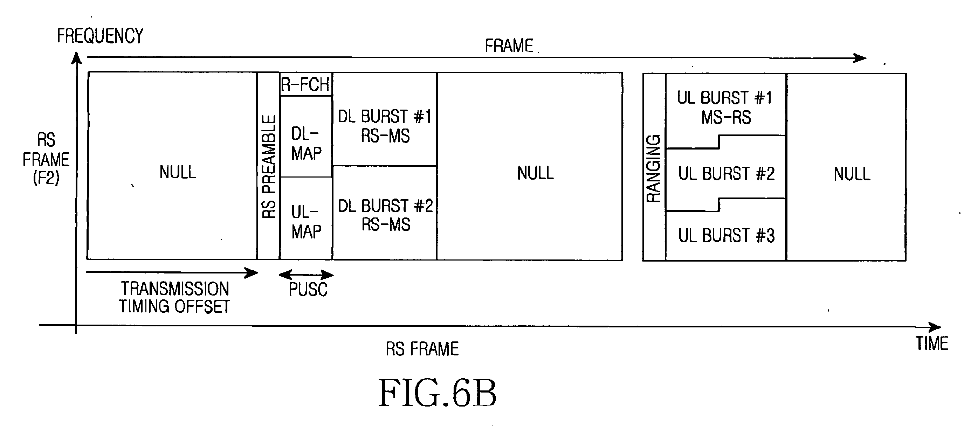

Figs. 6A and 6B show another example of a frame structure for transparent relaying according to the present invention. The frame structure is characterized in that a BS frame is asynchronous to an RS frame on the assumption that the RS does not isolate a transmission signal and a reception signal in different frequency bands from each other.

The BS divides each of the downlink sub-frame and the up-link subframe into two time slots or zones according to whether the RS is supported or not. For instance, the BS communicates with the RS or MSs in a first zone 601 and with MSs in a second zone 603. Thus, the BS places a burst destined for the RS in the first zone 601 so that transmission occurs after reception in the RS. The BS communicates with MSs connected to the BS via direct links in both the first and second zones 601 and 603.

If the RS is not capable of distinguishing signals transmitted and received in different frequency bands, it delays the RS frame by a timing offset from the transmission timing of the BS frame, for time-multiplexing of transmission and reception. That is, the RS sends the RS frame after the first zone 601. To eliminate reverse interference, the RS sends no data (null) in the overlap periods between the uplink of the BS and the downlink of the RS and between the downlink of the BS and the uplink of the RS. A transition gap for the operation transition of the RS is defined in the second zone.

The RS frame is sent a predetermined transmission timing offset after the transmission time of the BS frame. From the perspective of an MS, the BS frame is asynchronous to the RS frame.

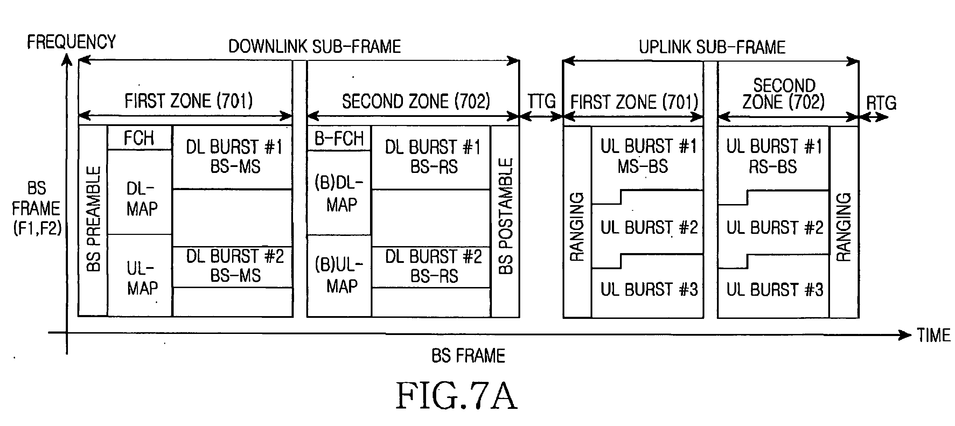

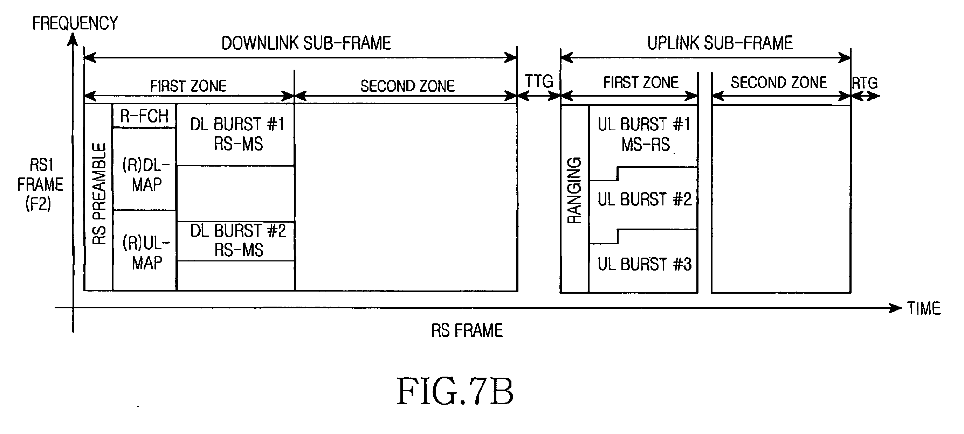

Figs. 7A and 7B show another example of a frame structure for transparent relaying according to the present invention. The frame structure is characterized in that a BS frame is synchronized to an RS frame on the assumption that the RS does not isolate a transmission signal and a reception signal in different frequency bands from each other. The BS divides each of the downlink subframe and the uplink subframe into two time slots or zones in order to prevent concurrent occurrence of transmission and reception in the RS. For example, the BS configures a BS frame so the BS communicates with an MS in a first zone 701 and with the RS in a second zone 702

In the BS frame, a sub-frame in the second zone may be provided or not depending on frequency band. In some frequency band among a plurality of frequency bands, the BS communicates only with an MS having a direct link. Thus, only the first-zone sub-frame is provided without the second-zone sub-frame. The BS communicates only with the RS in some other frequency band. Thus, only the second-zone sub-frame is provided without the first-zone sub-frame.

In the RS frame, a first zone of the downlink sub-frame carries a signal from the RS to an MS and a second zone of the downlink sub-frame carries a signal from the BS to the RS. A first zone of an uplink sub-frame carries a signal from an MS to the RS and a second zone of the uplink sub-frame carries a signal from the RS to the BS. The RS and the BS are synchronized to each other, in communicating with MSs.

The BS uses a plurality of frequency bands and configures frames for the respective frequency bands. In one frequency band, the RS receives a service from the BS via the relay link and provides the service to an MS via the sub-cell link using the same frequency. Here, a BS frame sent on the relay link is configured in the same structure as an RS frame sent on the sub-cell link. In The frequency band, the BS can communicate with an MS connected to the BS via a direct link as well as the RS.

In the RS frame, the second-zone sub-frame may be provided or not depending on the number of hops supported in the cellular system. For a three or more-hop system, the second-zone subframe is used for communications with an RS at the next hop. The second-zone subframe may be formed in a conventional configuration or a new configuration.

As described above, for transparent signal relaying using a plurality of frequency bands in a TDD multi-hop relay cellular network, sub-frames are spatially multiplexed in the same frequency band, as shown in FIG 4. Therefore, time synchronization eliminates interference from neighbor cells or sub-cells. Without time synchronization, a cellular network suffers from reverse interference between the direct link and the sub-cell link, as shown in FIG 5. The reverse interference refers to interference with high power that an uplink signal causes to a downlink signal in a neighbor cell, and vice versa.

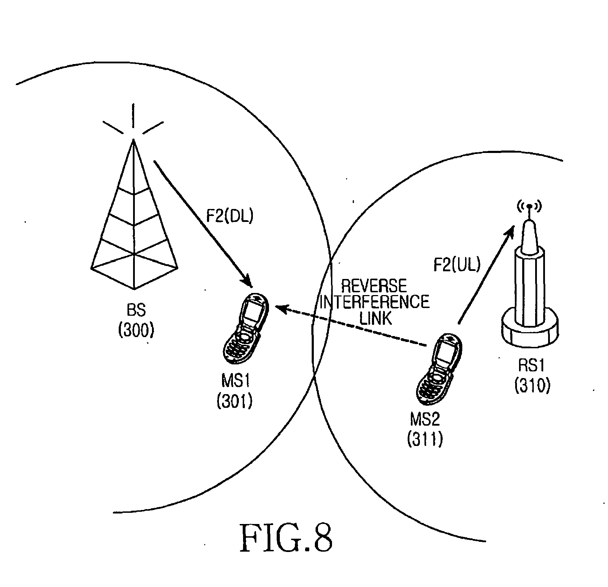

FIG. 8 shows a multi-hop relay cellular network suffering reverse interference according to an embodiment of the present invention. The BS 300 communicates with MS 1 in F2 via the direct link and the RS 310 communicates with MS2 in F2 via the sub-cell link. Without synchronization between the BS-MS link and the RS-MS link, the signals on the links interfere with each other, thereby significantly degrading system performance.

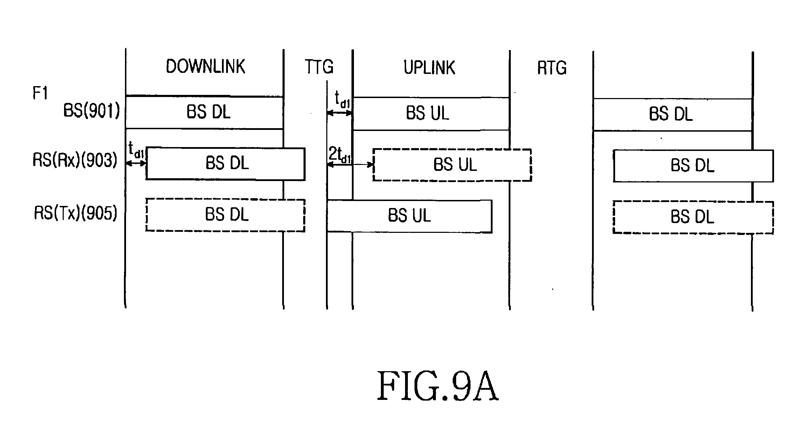

To eliminate reverse interference, the RS relays by use of a timing advance according to a transmission delay between the BS and the RS, as shown in Figs. 9A to 9D. The RS have to relay a RS downlink subframe to the MS by a 0.5xRTD-timing advance, taking into account the transmission delay of the BS.

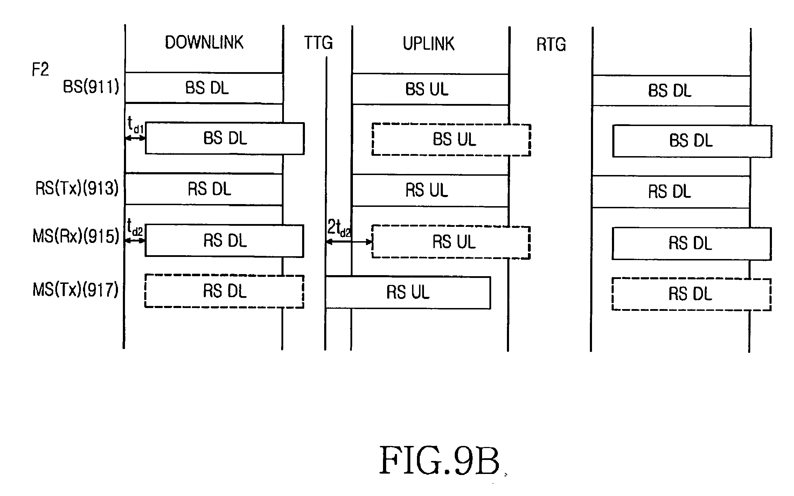

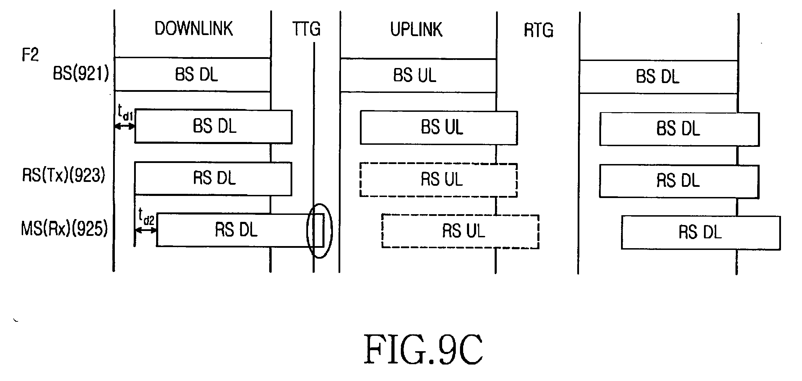

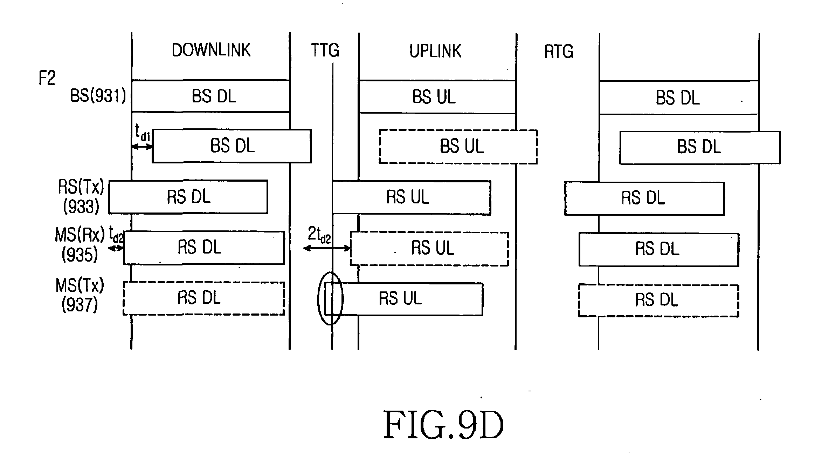

Figs. 9A to 9D show transmission timings for canceling interference in the multi-hop relay network according to the present invention. FIG. 9A is a timing diagram in F1 and FIG 9B is a timing diagram in F2. Figs. 9C and 9D show reverse interference caused by wrong timing advance.

The following description is made with the appreciation that one frame includes a downlink subframe, a Transmit/Receive Transition Gap (TTG), an uplink subframe, and a Receive/Transmit Transition Gap (RTG).

Referring to FIG 9A, the BS sends a downlink subframe in F1 in step 901 and an MS or an RS communicating with the BS in F1 receives the downlink subframe from the BS after a transmission delay in step 903. Then, the MS or the RS sends a BS uplink subframe to the BS by a timing advance, taking into account the Round Trip Delay (RTD) in step 905.

Referring to FIG 9B, the BS sends a downlink subframe in step 911 and the RS sends an RS downlink subframe to the MS by a 0.5xRTD-timing advance, taking into account the transmission delay of the BS in step 913. The 0.5xRTD-timing advance can prevent the uplink subframe of the MS having a direct link with the BS from interfering with the downlink subframe of the RS in F2. Without the timing advance, the interference occurs as illustrated in FIG. 9C. Referring to FIG 9D, if the RS advances the timing of a transmission signal in F2 by the RTD as with the communication link of F1, the uplink subframe of the RS interferes with the downlink subframe of the BS.

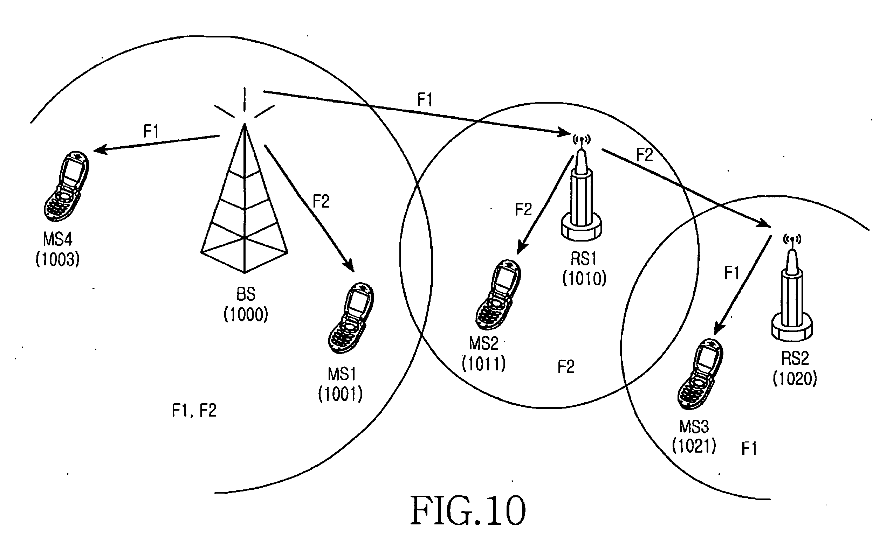

The setup of the relay link and the sub-cell link in different frequency bands in a two-hop cellular network can be extended to more hops as shown in FIG 10.

FIG 10 shows an extended multi-hop relay network for transparent relaying according to the present invention. Referring to FIG 10, a BS 1000 communicates with MSs 1001 and 1003 within its service area in two frequency bands F1 and F2. The BS 1000 communicates with a first RS 1010 (RS 1) in F1.

RS 1 communicates with the BS 1000 in F1. Also, RS 1 communicates with an MS 1011 within the sub-cell of RS 1 and a second RS 1020 (RS 2) in F2 via a sub-cell link and a two-hop relay link, respectively.

RS 2 communicates with RS 1 in F2. Also, RS 2 communicates with an MS3 1021 within the sub-cell of RS 2 in F1 via a sub-cell link.

As described above, the present invention can be extended to multiple hops by alternating different frequencies at each hop. The last-end RS is two hops away. For extension to three hops, the BS 1000 can be replaced with a one-hop RS and the RS 1010 can be replaced with a two-hop RS. An operation between two RSs one hop apart from each other is identical to the operation between the one-hop RS 1010 and the two-hop RS 1020 illustrated in FIG 10.

Now a description will be made of the operations of the RS and the multi-hop relay network, for transparent relaying of signals between the BS and the MS in a plurality of frequency bands.

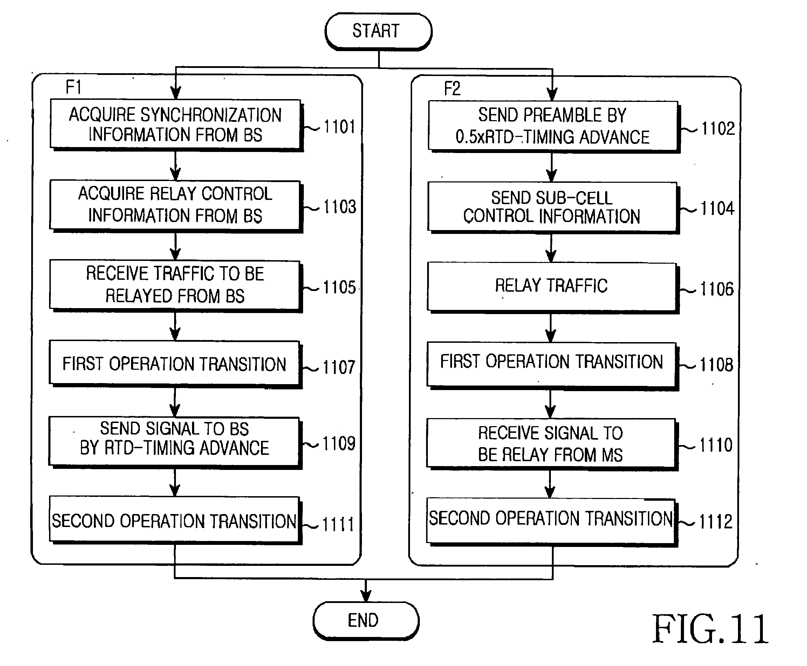

FIG 11 shows an operation for transparent relaying in the RS according to the present invention. While it is described that the transparent relaying is performed using two frequency bands, the transparent relaying can be extended to more frequency bands. Also, the RS uses F1 for the relay link and F2 for the sub-cell link simultaneously. That is, the relay link and the sub-cell link are in different frequency bands.

Referring to FIG 11, the RS communicates on the relay link and the sub-cell link, simultaneously using F1 and F2 in parallel. That is, the RS receives a signal from the BS on the relay link using F1 and sends the signal to the BS on the sub-cell link using F2.

Regarding an operation of the RS in F1, the RS acquires synchronization information by receiving a preamble signal from the BS in step 1101. From the perspective of the BS, the RS operates as an MS.

In step 1103, the RS acquires control information for relaying a signal to MSs within the sub-cell of the RS by receiving a Frame Control Header (FCH), a DownLink (DL) MAP, and an UpLink (UL) MAP from the BS.

The RS then receives a traffic signal to be relayed to an MS within the sub-cell from the BS based on the relay control information in step 1105.

In step 1107, the RS transitions from a reception mode for receiving a downlink signal from the BS to a transition mode (a first operation transition). Along with the first operation transition in F1, the reception mode transitions to the transmission mode in F2.

The RS sends an uplink signal received in F2 at the previous time to the BS by as much a timing advance as an RTD in step 1109.

In step 1111, the RS transitions from the transmission mode to the reception mode (a second operation transition). Then, the RS ends the algorithm of the present invention or returns to step 1103 or 1101 to receive the next frame.

Regarding an operation of the RS in F2, the RS sends a preamble signal in the sub-cell area in synchronization to the transmission timing of the downlink subframes of the BS in step 1102. That is, the RS performs a 0.5xRTD-timing advance, taking into account the transmission timing of the downlink subframe of the BS and the RTD.

In steps 1104 and 1106, the RS sends common control information and traffic received from the BS to the MS.

In step 1108, the RS transitions from the transmission mode for sending the downlink signal to the MS to the reception mode (a first operation transition). Along with the first operation transition in F2, the reception mode transitions to the transmission mode in F1.

In step 1110, the RS receives an uplink signal from the MS, for relaying to the BS.

After transitioning from the reception mode to the transmission mode in step 1112, the RS ends the process of the present invention or returns to step 1102 to receive the next frame.

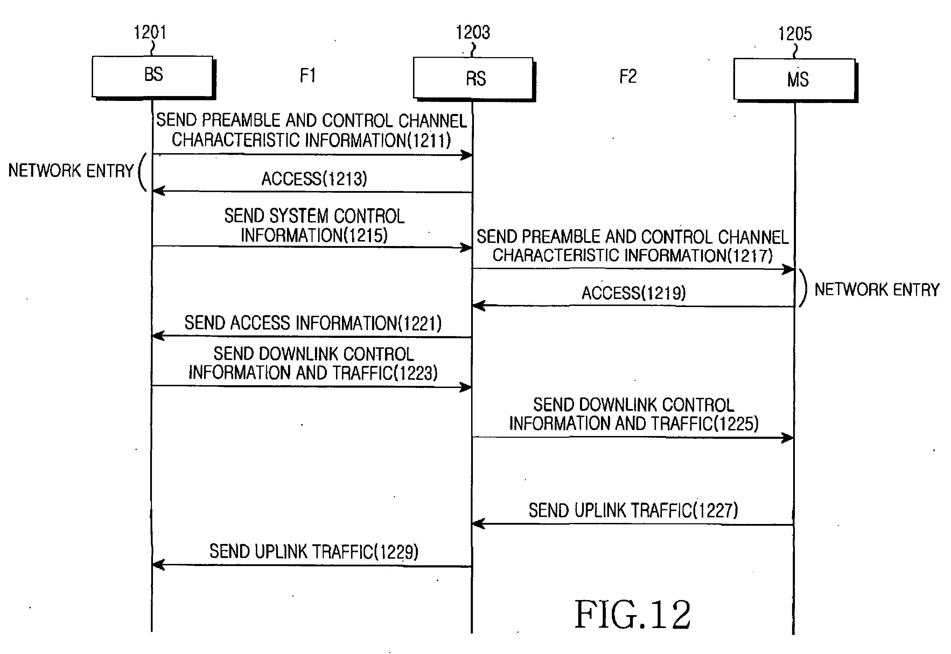

FIG. 12 shows a signal flow for transparent relaying in the multi-hop relay cellular network according to the present invention. A BS 1201 sends a preamble and control channel characteristic information to an RS 1203 in F1 in step 1211.

The RS 1203 acquires system synchronization and downlink and uplink control channel characteristic information using the preamble and control channel characteristic information. Then, the RS 1203 performs an access procedure to the BS 1201 according to the control channel characteristic in F1 in step 1213. During the access procedure, the RS 1203 may negotiate its relay capability with the BS 1201.

The BS 1201 sends system control information to the RS 1203, which includes information about the frequency band F2 for the sub-cell link on which to provide services to MSs within the sub-cell area of the RS 1203 in step 1215.

In step 1217, the RS 1203 broadcasts a preamble and control channel characteristic information to the MSs within the sub-cell area in F2 designated by the BS 1201.

An MS 1205 acquires system synchronization and downlink and uplink control channel characteristic information using the preamble and control channel characteristic information. Then, the MS 1205 performs an access procedure to the RS 1203 according to the control channel characteristic in F2 in step 1219.

Upon receipt of access information from the MS 1205, the RS 1203 relays the access information in F1 to the BS 1201 in step 1221.

In step 1223, the BS 1201 sends to the RS 1203 downlink control information and traffic for the MS 1205 to receive a relay service from the RS 1023. The downlink control information includes control information that enables the RS 1203 to select signals to be relayed.

In step 1225, the RS 1203 sends the control information and the traffic in F2 to the MS 1205.

The MS 1205 sends an uplink signal in F2 to the RS 1203 in step 1227 and the RS 1203 relays the uplink signal in F1 to the BS 1201 in step 1229.

As described above, relaying signals via the RS can expand the coverage area of the BS. However, since the RS receives a downlink signal from the BS, reconfigures the same information of the downlink signal, and sends the reconfigured information on the sub-cell link, the efficiency of radio resources is decreased. If the RS is located at the cell boundary of the BS for coverage expansion, the channel capacity of the relay link is decreased.

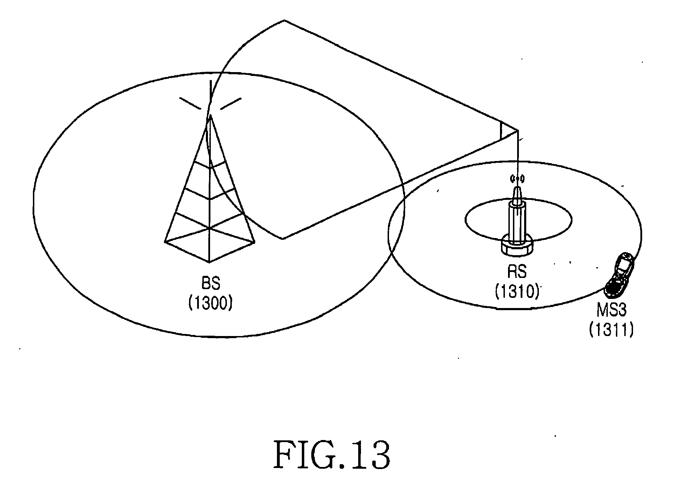

In accordance with the present invention, hence, the RS uses a directional antenna to increase the channel capacity of the relay link and expand the coverage area of the BS, as illustrated in FIG 13.

FIG. 13 shows a transmission operation in an RS according to the present invention. An RS 1310 establishes a communication link with a BS 1300 by use of a directional antenna, thereby increasing the channel capacity of a relay link between the RS 1310 and the BS 1300.

The RS 1310 further uses an omni-directional antenna to establish communication links with MSs within the sub-cell of the RS 1310, thus expanding the coverage area of the BS 1300. That is, the RS 1310 has two Radio Frequency (RF) ends for the directional antenna with which to establish the communication link with the BS 1300 and the omni-directional antenna with which to establish the communication link with the MSs.

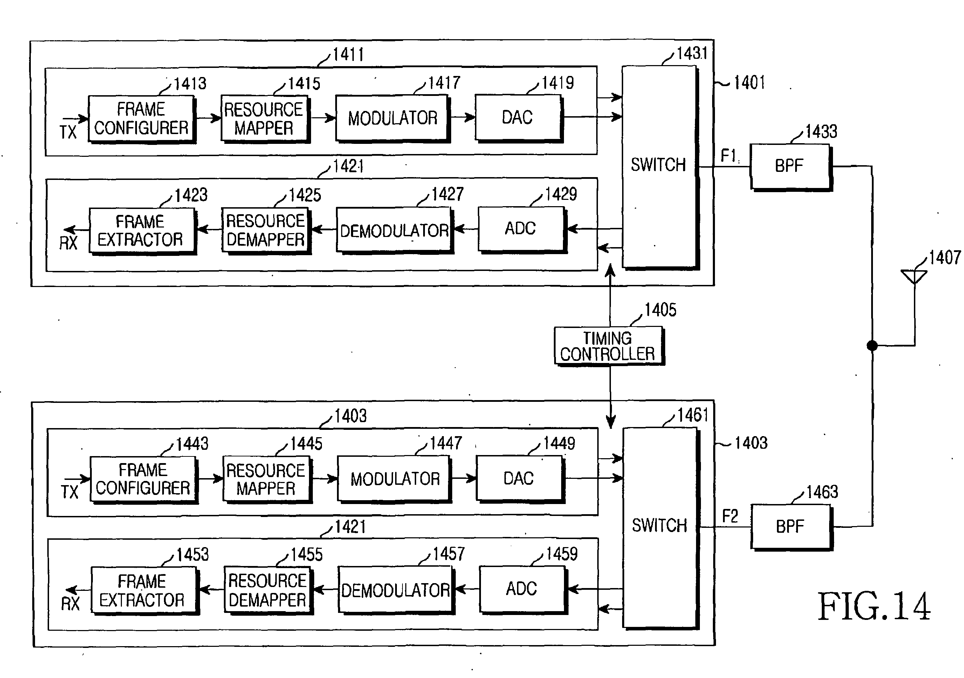

FIG 14 shows a BS for transparent relaying according to the present invention. The following description is made on the assumption of using two frequency bands. Since the BS communicates in the two frequency bands F1 and F2, it includes a transmission apparatus 1401 for F1, a transmission apparatus 1403 for F2, and Band Pass Filters (BPFs) 1433 and 1463. The transmission apparatuses 1433 and 1463 are identical in configuration and thus only the transmission apparatus 1401 will be described.

The BPFs 1433 and 1463 separate signals in the frequency bands of the transmission apparatuses 1401 and 1403 and send the signals to the transmission apparatuses 1401 and 1403.

The transmission apparatus 1401 for F1 has a transmitter 1411, a receiver 1421, and an RF switch 1431.

The transmitter 1411 includes a frame configurer 1413, a resource mapper 1415, a modulator 1417, and a Digital-to-Analog Converter (DAC) 1419.

The frame configurer 1413 generates subframes with data received from an upper layer according to destinations. For example, if the frame configurer 1413 is included in the BS, it configures a BS-MS subframe with data to be sent to an MS connected to the BS via a direct link, and a BS-RS subframe with data to be sent to an RS.

The resource mapper 1415 allocates the subframes to bursts of the links corresponding to the subframes.

The modulator 1417 modulates the subframes received from the resource mapper 1415 in a predetermined modulation scheme. The DAC 1419 converts the modulated digital signal to an analog signal, upconverts the analog signal to an RF signal, and sends the RF signal to the MS or the RS through the BPF 1433 and an antenna 1407 under the control of the RF switch 1431.

The receiver 1421 includes an Analog-to-Digital Converter (ADC) 1423, a demodulator 1425, a resource demapper 1427, and a frame extractor 1429.

The ADC 1423 downconverts a signal received in F1 through the BPF 1463 and the RF switch 1431 to a baseband signal and converts the baseband analog signal to a digital signal.

The demodulator 1425 demodulates the digital signal in a predetermined demodulation scheme.

The resource demapper 1427 extracts subframes from bursts of each link received from the demodulator 1425.

The frame extractor 1429 extracts intended subframes from the subframes received from the resource demapper 1427. For example, the intended subframes are a BS-MS subframe and a BS-RS subframe.

The RF switch 1431 switches the transmitters 1411 and 1421 to the BPF 1433 according to the transmission and reception bands of a frame under the control of a timing controller 1405.

The timing controller 1405 controls the transmission and reception timings of F1 and F2 in the frame.

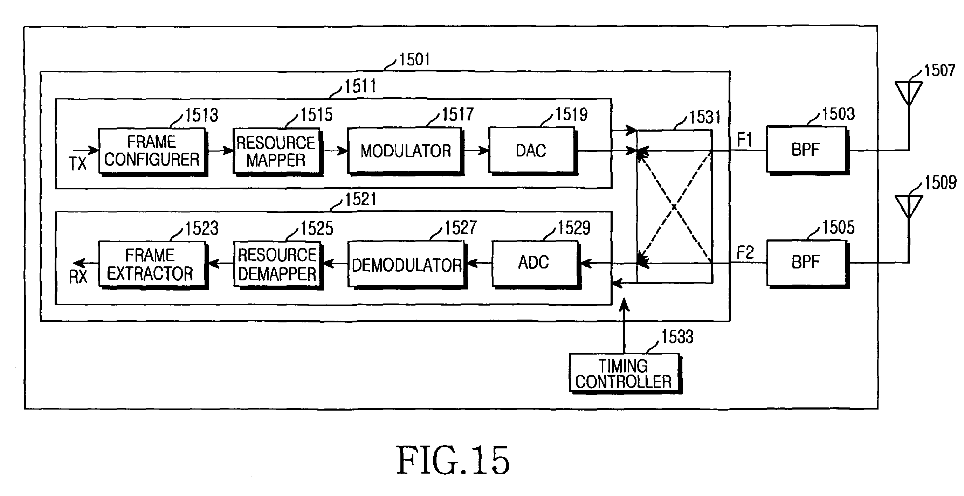

FIG 15 shows RS for transparent relaying according to the present invention. Each module in a transmitter and a receiver of the RS operates in the same manner as its counterpart shown in FIG 14 and thus its description will not be provided herein. The RS is provided with a directional antenna 1507 for increasing the channel capacity of a relay link between the BS and the RS and an omni-directional antenna 1509 for communicating with MSs within the sub-cell of the RS.

The RS switches between the two antennas and between the two frequency bands according to the switching of an RF switch 1531. That is, upon receipt of a downlink signal from the BS in F1 through the directional antenna 1507 in a receiver 1521, a transmitter 1501 relays the downlink signal to the MSs within the sub-cell in F2 through the omni-directional antenna 1509. The downlink signal is a signal received from the BS at the previous time.

Upon receipt of an uplink signal from an MS in F2 through the omni-directional antenna 1509 in the receiver 1521, the transmitter 1501 relays the uplink signal to the BS in F1 through the directional antenna 1507. The uplink signal is a signal received from the MS at the previous time.

A timing controller 1533 generates a timing signal for transmitting and receiving signals to and from the BS and the MSs in different frequency bands and controls the operation of the RF switch 1531 by the timing signal. Also, the timing controller 1533 controls an RS downlink subframe to be sent with a 0.5xRTD timing advance according to the transmission timing and transmission delay of the BS in order to prevent reverse interference in F2.

In accordance with the present invention as described above, signals are transparently relayed using a plurality of frequency bands in a multi-hop relay cellular network. Therefore, the coverage area of a BS is expanded and the back compatibility of an MS is ensured. Also, the use of a directional antenna on a relay link between a BS and an RS increases the channel capacity of the relay link.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of supporting a relay service in a Relay Station (RS) in a cellular network, comprising:
communicating with a higher-layer node in a first frequency band; and
communicating with a lower-layer node in a second frequency band.

2. The method of claim 1, wherein the higher-layer node is one of a Base Station (BS) and a higher-layer RS.

3. The method of claim 1, wherein the lower-layer node is one of a lower-layer RS and a Mobile Station (MS) within a service area of the RS.

4. The method of claim 1, wherein communicating with a higher-layer node in a first frequency band comprises:
receiving a signal including control information from the higher-layer node;
transitioning to a transmission mode; and
sending a signal received from the lower-layer node at a previous time to the higher-layer node.

5. The method of claim 4, wherein the control information includes information about the second frequency band.

6. The method of claim 4, wherein sending a signal received from the lower-layer node at a previous time to the higher-layer node comprises sending the signal by a timing advance as long as a Round Trip Delay (RTD) according to a transmission timing and a transmission delay of a signal received from the higher-layer node.

7. The method of claim 1, wherein communicating with a lower-layer node in a second frequency band comprises:
sending a signal received from the higher-layer node to the lower-layer node;
transitioning to a reception mode; and
receiving a signal from the lower-layer node in the second frequency band.

8. The method of claim 7, wherein sending a signal received from the higher-layer node to the lower-layer node comprises sending the signal by a timing advance as long as 0.5xRTD according to the transmission timing and transmission delay of the signal received from the higher-layer node.

9. The method of claim 1, wherein the communications are conducted in the first and second frequency bands in parallel.

10. An apparatus for supporting a relay service in a Relay Station (RS) in a cellular network, comprising:
a timing controller for providing a timing signal for transmitting and receiving signals in use frequency bands of predetermined links;
a first transceiver for communicating with a higher-layer node in a first frequency band according to the timing signal; and
a second transceiver for communicating with a lower-layer node in a second frequency band according to the timing signal.

11. The apparatus of claim 10, wherein the higher-layer node is one of a Base Station (BS) and a higher-layer RS.

12. The apparatus of claim 10, wherein the lower-layer node is one of a lower-layer RS and a Mobile Station (MS) within a service area of the RS.

13. The apparatus of claim 10, wherein the timing controller provides the timing signal so a signal can be sent to the higher-layer node by a timing advance as long as a Round Trip Delay (RTD) according to a transmission timing and a transmission delay of a signal received from the higher-layer node and a signal can be sent to the lower-layer node by a timing advance as long as 0.5xRTD according to the transmission timing and transmission delay of the signal received from the higher-layer node.

14. The apparatus of claim 10, wherein each of the first and second transceivers comprises:
an antenna for providing an externally received signal to a receiver and externally sending a signal generated from a transmitter;
the transmitter for sending a predetermined frequency band signal according to the timing signal; and
the receiver for receiving a predetermined frequency band signal according to the timing signal.

15. The apparatus of claim 14, wherein the transmitter comprises:
a frame configurer for configuring a transmission frame according to a frame configuration method; and
a resource mapper for mapping a subframe included in the frame to resources allocated to a burst of a link.

16. The apparatus of claim 14, wherein the receiver comprises:
a resource demapper for extracting a subframe from bursts of the received signal; and
a frame extractor for extracting a subframe of a link from the extracted subframes.

17. The apparatus of claim 14, further comprising a switch for switching an antenna to one of the transmitter and the receiver under control of the timing controller.

18. The apparatus of claim 10, wherein the first and second transceivers operate in parallel under control of the timing controller.

19. A subframe configuration method for supporting a relay service using at least two frequency bands in a wireless communication system, comprising:
configuring a first frequency band-subframe and a second frequency band-subframe in a first zone of a subframe, the first frequency band-subframe being used for communicating between a Base Station (BS) and at least one of a Mobile Station (MS) and a first Relay Station (RS) that does not provide a synchronization channel and the second frequency band-subframe being used for communicating between a second RS that provides a synchronization channel and an MS; and
configuring a first frequency band-subframe for communicating between the BS and the second RS in a second zone of the subframe.

20. The subframe configuration method of claim 19, wherein the synchronization channel is positioned at a start of the first zone and at an end of the second zone.

21. The subframe configuration method of claim 19, wherein the first frequency band-subframe is spatially multiplexed with the second frequency band-subframe.

22. The subframe configuration method of claim 19, wherein the first frequency band-subframe for communicating between the BS and the MS and the second frequency band-subframe for communicating between the second RS and the MS have the same structure in the first zone.

23. A subframe configuration method for supporting a relay service using at least two frequency bands in a wireless communication system, comprising:
configuring a subframe for communicating between a Base Station (BS) and at least one of a Mobile Station (MS) and a Relay Station (RS) in a first zone of a subframe; and
configuring a first frequency band-subframe for communicating between the BS and an MS and a second frequency band-frame for communicating between the RS and an MS in a second zone of the subframe.

24. The subframe configuration method of claim 23, wherein the first frequency band-subframe is spatially multiplexed with the second frequency band-subframe.

25. The subframe configuration method of claim 23, wherein the first frequency band-subframe for communicating between the BS and the MS and the second frequency band-subframe for communicating between the RS and the MS have the same structure.
